# EUROPÄISCHE PATENTSCHRIFT

(11) **EP 1 074 344 B1**
(45) Veröffentlichungstag und Bekanntmachung des Hinweises auf die Patenterteilung: **13.04.2005**
(21) Anmeldenummer: 00116074.6
(22) Anmeldetag: 27.07.2000
(51) Int. Cl.: B24C 3/04, B24C 3/32

(54) **Vorrichtung zu Reinigung von Vulkanisationsformen**
Apparatus for cleaning vulcanization moulds
Dispositif pour nettoyer des moules de vulcanisation

(30) Priorität: 04.08.1999 DE 19936698
(43) Veröffentlichungstag der Anmeldung: 07.02.2001
(73) Patentinhaber: Continental Aktiengesellschaft, 30165 Hannover (DE)
(72) Erfinder: Nguyen, Nhu Vinh, 30419 Hannover (DE); Gonschior, Martin, Dr., 30459 Hannover (DE); Pohlmann, Robert, 34454 Bad Arolsen (DE); Köhler, Heinz, 35066 Frankenberg (DE); Rapin, Marc, 57510 Ernestviller (FR); Wenzel, Karsten, 31691 Helpsen (DE); Pontzen, Leo, 52072 Aachen (DE); Schnell, Heinrich, 34497 Korbach (DE); Brandt, Holger, 30173 Hannover (DE); Kuhr, Wolfgang, 52066 Aachen (DE)

(56) Entgegenhaltungen:
- EP-A- 0 494 804
- WO-A-98/07548
- DE-A- 19 519 825
- DE-A- 19 535 557
- DE-A- 19 712 513
- FR-A- 2 225 027
- US-A- 3 905 155
- US-A- 4 016 681

## Beschreibung

Die Erfindung betrifft eine Vorrichtung zur Reinigung der Innenwandungen **gemäß dem Oberbegriff des Anspruchs 1.**

Zum Reinigen der Innenoberfläche bzw. der Innenwandungen von im industriellen Bereich eingesetzten Formen und Werkzeugen, im wesentlichen von solchen aus Metall, sind unterschiedlichste chemische und physikalische Reinigungsverfahren und Möglichkeiten bekannt.

Während die chemischen Reinigungsverfahren aufgrund der dort verwendeten oft aggressiven Mittel einen - aufgrund gesetzlicher Vorschriften - hohen Aufwand an Sicherheits- und Entsorgungseinrichtungen erfordern, ist es bei den physikalischen Reinigungsverfahren, bei denen die Verunreinigungen in der Regel durch Beschuß oder Bestrahlung der zu reinigenden Oberfläche mit Sand-, Metall- oder Glaspartikeln entfernt werden, erforderlich, daß das Reinigen selbst in gesonderten Kabinen durchgeführt wird, wozu das zu reinigende Bauteil zunächst aus der entsprechenden Maschine ausgebaut und in eine solche Kabine eingelegt werden muß.

Eine weitere Alternative besteht darin, Bauteile mittels Beschuß durch Trockeneispellets, also kleinen Trockeneisstücken in Reiskorngröße, zu reinigen. Beim Trockeneis handelt es sich um in den festen Aggregatzustand überführtes und auf mindestens - 78,5°C gekühltes Kohlendioxid, welches den Vorteil aufweist, daß es unter Atmosphärendruck unmittelbar vom festen Aggregatzustand in den gasförmigen übergeht, wobei keine Schmelzflüssigkeit entsteht. Dadurch kann auf besonders einfache Weise, nämlich mit normaler Druckluft, sowohl der Beschuß mit Trockeneis als auch die Absaugung und Abfuhr der Schmutzpartikel erfolgen.

Beim Beschuß mit Trockeneispellets entstehen mehrere vorteilhafte Effekte. Neben dem zunächst erfolgenden mechanischen Abtragen von Verunreinigungen durch Abrasion ergibt sich eine starke punktuelle Abkühlung des bestrahlten Bereiches, wodurch die Verunreinigungen, besonders bei Gummiresten in Reifenformen, verspröden und sich leichter entfernen lassen. Zudem entsteht beim Aufprall der Trockeneispellets auf die Oberfläche unter Atmosphärendruck der bereits genannte Übergang des Trockeneises in den gasförmigen Zustand, wobei eine ca. 700fache Volumenvergrößerung des Trockeneises stattfindet. Die dadurch entstehenden Gaswirbel sind in der Lage, die unterkühlten und versprödeten Verunreinigungen auszublasen, ohne den Untergrund oder die Oberfläche selbst zu beschädigen.

Bei der Trockeneisreinigung entsteht jedoch eine außerordentlich hohe Schallemission, und es besteht die Notwendigkeit, eine große Menge von mit Trockeneis, Kohlendioxid oder Verunreinigungen versetzte Druckluft zu- und wieder abzuführen. Auch hierbei ist es entweder notwendig, das zu reinigende Bauteil in gesonderten Kabinen zu behandeln oder aber - sofern das Bauteil insitu gereinigt werden soll - die Umgebung sehr aufwendig gegenüber den Emissionen des Trockeneisreinigungsverfahrens abzuschirmen.

Zudem müssen viele Reinigungsverfahren, beispielsweise die Reinigung von Vulkanisationsformen für Reifen, relativ schnell erfolgen, damit Produktionsstillstände vermieden werden. Darüber hinaus sind gerade Vulkanisationsformen für Reifen nach der Entnahme des Vulkanisationsgutes noch für längere Zeit sehr heiß, so daß eine Entnahme der Formen und der Transport in eine gesonderte Kabine erst nach Abkühlung erfolgen kann und lange Zeit in Anspruch nimmt. Dabei ist eine Reinigung durch manuell betätigte Strahlanlagen innerhalb der Vulkanisationspresse (insitu) aufgrund der genannten Emissionen und der Wärme nur sehr schwierig und teilweise gar nicht durchführbar.

Die DE 197 12 513 A1 offenbart hierzu ein Verfahren und eine Vorrichtung zum Reinigen einer Innenwandung einer Form mittels Trockeneis, wobei die Reinigung innerhalb der Vulkanisationspresse erfolgen kann, ohne daß die Vulkanisationsform ausgebaut werden muß.

Die Vulkanisationsformen für Reifen sind in aller Regel als Teilformen ausgebildet, die nach dem Vulkanisationsvorgang geöffnet werden können. Dabei unterscheidet man Segmentformen, die meistens eine obere Form aufweisen, die den zu vulkanisierten Reifen an einer Seite und am Laufstreifen umfaßt, und die im Laufstreifenbereich seitlich zustellbare Segmente zum Schließen der Form aufweist, und die eine untere Form (Seitenschale) umfassen, mit der die Form geschlossen und die verbleibende Seite geformt und vulkanisiert wird.

Auf der anderen Seite existieren die zweigeteilten Formen, die nahezu identisch ohne verschiebbare Segmente ausgebildet sind und jeweils eine Seitenwand und etwa die Hälfte des Laufstreifenbereiches umfassen.

Bei der in der DE 197 12 513 A1 dargestellten Vorrichtung ist eine Kapselung des zu reinigenden Bereiches vorgesehen, welche mittels beider Teilformen und eines gegebenenfalls teleskopierbar oder balgartig ausgebildeten Mantels erfolgt, wobei der Mantel bzw. die Kapselung auch die Strahleinrichtung enthält.

Der Nachteil dieser Art der Kapselung besteht darin, daß eine vollständige Kapselung nur dadurch erfolgen kann, daß der Mantel zwischen beiden Teilformen und an diese anschließend aufgespannt und fixiert werden muß, wodurch hier das Anbringen der Kapselung an die noch heißen Formen einen hohen manuellen Aufwand erfordert und auch erst nach einer längeren Abkühlzeit durchgeführt werden kann. Dabei muß die Kapselung bzw. der Mantel zudem so flexibel sein, daß unterschiedliche Stellungen der beiden Teilformen zueinander überbrückbar sind und noch eine bewegliche seitliche Durchführung für einen Roboterarm aufweisen, was die Gesamtkonstruktion sehr aufwendig werden läßt und in die Nähe einer "Kabinenreinigung" rückt.

Der Einsatz von Industrierobotern ist darüberhinaus aufgrund der Wärmeabstrahlung bei der Erwärmung der Robotereinrichtungen / -steuerungen auf über 60° problematisch und erfordert zudem vor jedem Reinigen einer Form eine räumliche Neupositionierung / Neueinlesung des exakten Roboterstandpunktes anhand von drei Bezugspunkten, was vor jedem neuen Reinigungsgang eine Neuprogrammierung erfordert, wenn nicht stationäre oder mindestens schienengebundene Robotereinrichtungen vorgesehen sind, die aber wieder den normalen Produktionsablauf stören.

Aus der US-PS 3,905,155 ist eine Vorrichtung zur Reinigung der Innenwandungen einer oberen und einer unterenTeilform einer geteilten Vulkanisationsform bekannt. Die Vorrichtung weist eine Isolationshaube auf, innerhalb der eine Strahleinrichtung angeordnet ist Die Strahleinrichtung ist an einem Arm aufgehängt, der durch ein Fenster in der Isolationshaube an einem Aufsatz der Isolationshaube befestigt ist Durch das Zentrum der Isolationshaube ist eine Spindel geführt, mit Hilfe der die Isolationshaube gedreht werden kann.

Bei einer Reinigung einer Teilform der Vulkanisationsform wird die Isolationshaube zunächst auf die Teilform aufgesetzt. Danach wird die Isotationshaube mit Hilfe der Spindel mehrfach um ihre Hochachse gedreht, wobei die Strahleinrichtung mitgedreht wird. Während der Rotation wird über den Schlauch Reinigungsmittel in die Strahleinrichtung überführt, so dass während der Rotation die Teilform besprüht und gereinigt wird.

Die DE 195 35 557 A1 offenbart eine Vorrichtung zum Reinigen einer Innenwandung einer Form mit Trockeneispellets mit einer einen Öffnungsquerschnitt der Form abdeckenden Schutzhaube, durch die sich mindestens die Versorgungsleitungen erstrecken, und die in ihrem Randbereich mindestens eine elastische Dichtung zur Anlage an die Form aufweist. Nachteiligerweise sind bei dieser Vorrichtung jedoch nicht nur sämtliche Handhabungseinrichtungen zur Verstellung der Strahldüse, sondern auch zur Verstellung der Schutzhaube an einem die Schutzhaube durchdringenden Zentralträger angeordnet, wobei sich Teile des Zentralträgers und einige Betätigungseinrichtungen, insbesondere die zur Höheneinstellung der Düse, außerhalb und unterhalb der Schutzhaube befinden. Hierdurch wird die Bauhöhe der gesamten Vorrichtung in einem Maße vergrößert, daß eine insitu" Reinigung, zumindestens bei Reifenformen für kleinere Reifen, nicht mehr möglich ist. Zudem werden eine Reihe von mit Lagern versehen Drehdurchführungen in der Schutzhaube erforderlich, wodurch sich das Gewicht der Vorrichtung erhöht und deren Handhabung erschwert wird.

Für die Erfindung bestand also die Aufgabe, eine Vorrichtung zur Reinigung der Innenwandungen von Formen mittels Strahlgut, insbesondere zur Trockeneisreinigung der Innenbereiche von Vulkanisationsformen, bereitzustellen, welche insitu, d.h. in der Vulkanisationspresse nach Öffnen der Formen und ohne das Abwarten von Abkühlzeiten, einsetzbar ist, welche eine sichere und vollständige Kapselung des Strahl- oder Reinigungsbereiches bereitstellt, die ohne manuelle Tätigkeiten auf einfachste Weise installiert werden kann und mit welcher beliebige Teilformen von Vulkanisationsformen in beliebigen Pressenarten unterschiedlichster Abmessungen, beispielsweise innerhalb von Hub- und Schwenkpressen, unabhängig von ihrer Stellung zueinander, gereinigt werden können.

Gelöst wird diese Aufgabe durch die Merkmale des Hauptanspruchs. Weitere vorteilhafte Ausbildungen sind in den Unteransprüchen enthalten.

Hierbei ist die Isolationshaube mit Hilfe einer kardanischen Aufhängung an einem im wesentlichen quer zu ihrer Achse und im wesentlichen horizontal sich erstreckenden beweglichen Auslegerarm einer Transporteinrichtung aufgehängt und mit einem im Bereich ihrer Öffnung angeordneten austauschbaren Adapterring zum abdichtenden Anschluß am Außenumfang einer Teilform versehen, so daß die Strahleinrichtung und die Manipulationseinrichtung vollständig innerhalb des durch Teilform, Adapterring und Isolationshaube gebildeten Strahl- bzw Reinigungsraumes aufgenommen und gekapselt werden.

Durch eine solche Ausbildung, bei der die Öffnung der Isolationshaube - *nur* - an eine Teilform bzw. an deren Außenumfang mit Hilfe eines Adapterringes abdichtend anschließbar ausgebildet ist, ist eine weitgehende Automatisierung des Reinigungsvorganges ohne manuelle Zusatztätigkeiten erreichbar, wobei darüber hinaus der zu kapselnde Bereich minimiert und im wesentlichen auf die Abmessungen der geöffneten Presse begrenzt ist. Bei einer solchen Lösung, bei der die Isolationshaube an einem beweglichen und im wesentlichen quer zu ihrer Achse sich erstreckenden Auslegerarm einer Transporteinrichtung aufgehängt ist, ist es direkt nach dem Öffnen der Vulkanisationspresse und nach der Entnahme des Reifens möglich, die Isolationshaube und damit die in ihr vorhandenen Reinigungseinrichtungen zunächst z. B. an die obere Teilform anzusetzen, diese zu reinigen, danach den Reinigungsvorgang zu unterbrechen und in gleicher Weise die Isolationshaube nach Austausch des Adapterringes durch einfaches Drehen und Neupositionieren auf die untere Teilform aufzusetzen, wonach auch diese gereinigt werden kann. Dabei ist es durch den beweglichen Auslegerarm, der in jeder Stellung fixierbar ist, unwesentlich, ob es sich bei dem Vulkanisationspressen um Hubpressen handelt, die die Ober- und Unterform in einer Achse vertikal auseinander fahren oder um Schwenkpressen, bei denen beispielsweise die Oberform durch eine Schwenkbewegung hochgeklappt wird.

Mit Hilfe des im Bereich ihrer Öffnung angeordneten austauschbaren Adapterringes ist die Isolationshaube zum abdichtenden Anschluß am Außenumfang beliebiger Teilformen geeignet. Durch solche Adapterringe kann die Isolationshaube bzw. deren Anschlußöffnung an beliebige Formabmessungen und -ausbildungen angepaßt werden, beispielsweise an die Anschlußmaße bzw. an den Außenumfang von Segmentformen oder zweigeteilten Formen unterschiedlicher Abmessungen und unterschiedlicher Oberflächenformen an ihren Randbereichen. Der Adapterring kann hierzu beispielsweise in seinem Anschlußbereich an die Teilform eine umlaufende Dichtung aufweisen, die an die Teilform anpressbar ist oder selbst in seinem Anschlußbereich komplementär zur Oberflächenform der Teilform ausgebildet sein.

Die Isolationshaube weist vorteilhafterweise eine Durchführung für eine Absaugung von bei der Reinigung anfallenden Schmutzpartikeln und/oder Strahlmittel auf. Im Falle der Trockeneisreinigung reduziert sich diese Absaugung auf die Absaugung von Druckluft bzw. auf lediglich eine Abfuhrleitung, da durch den abdichtenden Anschluß der Isolationshaube an jeweils nur eine Teilform ein kleiner Druckraum entsteht, aus dem das durch Druckluft in Form von Trockeneispellets eingeführte und vergaste Kohlendioxid mitsamt den Verunreinigungen ausgefördert werden kann.

In einer einfachen Ausführung kann eine solche Abfuhrleitung als rohrförmiger und mit einem gasdurchlässigen Filter versehener Kanal ausgebildet sein, beispielsweise in Bodenbereich der Isolationshaube, wodurch sich der Innendruck im Strahl- bzw. Reinigungsraum und damit die zur Anpressung der Adapterringe an die Form nötige Druckkraft reduziert.

Durch eine solche Ausbildung der Vorrichtung gemäß Anspruch 2 ist es möglich, eine große Anzahl von Formenausbildungen (Oberformen und Unterformen) und Formabmessungen präzise zu reinigen, auch wenn über die verschiedenen Adaptereinrichtungen bzw. Adapterringe die Isolationshaube an Formen angeschlossen wird, deren Außenumfang nicht dem Umfang der Isolationshaube entspricht. Der Austrittsquerschnitt der Düse kann in jedem Fall in eine solche Nähe zur Innenoberfläche der Form gebracht und so gesteuert werden, daß optimale Anblasentfernungen bzw. Anblaswinkel einstellbar sind und sukzessive sämtliche Oberflächenbereiche nach einem vorher eingestellten Raster abgestrahlt werden können.

Durch die Aufhängung der Isolationshaube an einem Auslegerarm gemäß Anspruch 3 läßt sich die Isolationshaube mit dem Adapterring besonders leicht an Teilformen unterschiedlicher Pressentypen anschließen, beispielsweise gleichermaßen an Formen in lediglich in vertikaler Richtung auseinander fahrenden Hubpressen und an Formen in aufklappbaren Schwenkpressen, die im geöffneten Zustand eine beliebige räumliche Schräglage einnehmen können.

Sämtliche Bewegungen in den fünf Achsen sind dabei, wie auch die Bewegungen in den vier Achsen der Manipulations- bzw. Strahleinrichtung, steuerbar angetrieben und feststellbar, so das zum Beispiel auf einfache Weise ein Niveauausgleich zwischen Transporteinrichtung und Teilform bzw. Presse, eine Winkeleinstellung der Isolationshaube nebst Adaptereinrichtung für gekippte / geschwenkte Oberformen (Teilformen), und eine Drehung zum Anschluß an die Unterform (Teilform) möglich sind. Zusätzlich ist es vorteilhaft, daß zum Ausgleich von Lageabweichungen beim Anschluß- oder Andockvorgang an die Teilformen ein oder mehrere der Lagerungen als rückfedernde Lagerungen ausgebildet sind, beispielsweise als mit Tellerfedern versehene rückfedernde Schiebelagerungen.

Zur Verbesserung der Schallisolation ist die Isolationshaube als spezielle Schallschutzhaube ausgebildet, wobei im wesentlichen ihre Wandungen mit schallabsorbierenden Materialien versehen sind. Dies kann dadurch geschehen, daß die Isolationshaube doppelwandig ausgebildet ist und der Innenraum zwischen den Wänden mit Schallschutzmaterial wie z. B. besonderem Schaumstoff ausgefüllt ist oder dadurch, daß auf der Innenseite der Isolationshaube gummierte Schallschutzmatten angebracht sind. Selbstverständlich ist es auch möglich, die Isolationshaube selbst aus schallabsorbierendem Material auszubilden, welches zusätzlich, wie bereits dargestellt, mindestens teilweise gasdurchlässig sein und Filtereigenschaften aufweisen kann.

Eine besonders vorteilhafte Ausbildung einer solchen Schallschutzhaube besteht darin, daß die Isolationshaube als Vieleck, vorzugsweise als Rechteck ausgebildet ist, wobei der Adapterring dann denn Übergang von der Vieleckform der Isolationshaube auf die Anschlußform der zu reinigenden Vulkanisationsform bereitstellt. Hierdurch ergibt sich - beispielsweise im Vergleich zu einer Kreisform - eine wesentlich verbesserte Schallisolation bzw. Schallabsorption aufgrund der innerhalb eines als Vieleck vielfach diffuser ausgebildeten Reflexionen und Interferenzen der Schallwellen. Bei einer solchen Ausführung ergibt sich ein wesentlich verbesserte Resonanzverhalten im Sinne einer Reduzierung der Resonanz.

In einer weiteren vorteilhaften Ausbildung weist die Vorrichtung eine zentrale oder mehrere, ggf. abhängige Steuereinrichtungen sowie zugehörige Sensoreinrichtungen für alle Bewegungsarten auf. Hiermit lassen sich auf einfache Weise der Gesamtablauf des Reinigungsvorgangs oder Teile davon automatisieren.

In einer weiteren vorteilhaften Ausführung ist die Transporteinrichtung als flurgebundener und frei beweglicher Reinigungswagen ausgebildet, so daß ohne aufwendige Schienen- oder Traversenführungen eine Reinigung und eine Zugänglichkeit über normale Transport- und Verfahrwege erfolgen kann.

Anhand eines Ausführungsbeispiels soll die Erfindung näher erläutert werden. Es zeigen:
- Fig.1a: eine aus Ober- und Unterform bestehende Segmentform
- Fig 1b: eine aus Ober- und Unterform bestehende zweigeteilte Form
- Fig. 2a: eine Prinzipsskizze der erfindungsgemäßen Vorrichtung beim Reinigen einer Oberform in einer vertikal verfahrbaren Presse
- Fig.2b: eine Prinzipsskizze der erfindungsgemäßen Vorrichtung beim Reinigen der Oberform einer durch Schwenkbewegung aufklappbaren Presse
- Fig. 3: die erfindungsgemäße Vorrichtung mit Isolierhaube im Schnitt
- Fig. 4a: eine in der Unterform einer Segmentform aufgesetzte Vorrichtung innerhalb einer mit einer vertikalen Hubbewegung zu öffnenden Presse
- Fig. 4b: eine an der oberen Segmentform aufgesetzte erfindungsgemäße Vorrichtung in derselben Presse wie in Figur 4a
- Fig.5a: den Einsatz einer erfindungsgemäßen Vorrichtung zur Reinigung einer oberen Segmentform einer Schwenkpresse
- Fig. 5b: den Einsatz der erfindungsgemäßen Vorrichtung zur Reinigung der Seitenform einer mit einer Segmentform bestückten Schwenkpresse.

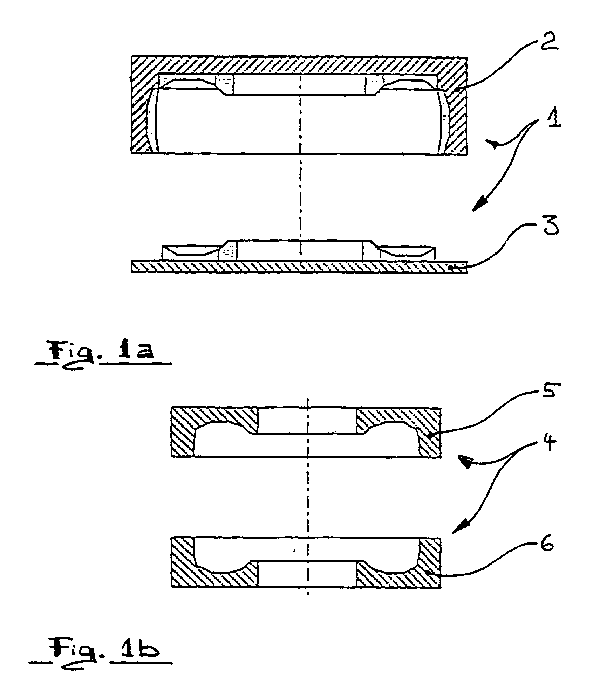

Die Figuren 1a und1b zeigen die heute größtenteils verwendeten Typen von Formen für die Vulkanisation von Reifen. Hierbei zeigt die Figur 1a eine sogenannte Segmentform 1, bestehend aus einer oberen Teilform 2 und einer unteren Teilform 3. Hierbei formt nach Einlage des Reifenrohlings und nach Schließen der oberen und unteren Teilform die obere Teilform mit ihrem oberen Bereich eine Seitenwand und mit ihrem Umfangsbereichen den Laufstreifen des zu vulkanisierenden Reifens, während die untere Teilform, auch als Seitenwandschale bezeichnet, die andere Seitenwand des Reifens unter Druckund Vulkanisationshitze ausformt. Die Umfangsbereiche der oberen Teilform sind hierbei in einzelne Kreissegmente aufgeteilt, die ebenfalls vor dem Einlegen des Reifenrohlings leicht geöffnet und zum Vulkanisieren geschlossen werden können, hier jedoch nicht näher dargestellt sind.

Wesentlich in Bezug auf die durchzuführenden Reinigungsarbeiten ist hierbei lediglich, daß es sich bei der oberen Teilform um eine relativ tiefe und den Reifenrohling bzw. den Reifen von drei Seiten umschließende Teilform handelt, deren Reinigung sich aufgrund des voluminösen Formkörpers insbesondere dann schwierig gestaltet, wenn die Formen ausgebaut werden müssen.

Die Figur 1b zeigt demgegenüber eine zweigeteilte Form 4 mit der oberen Teilform 5 und der unteren Teilform 6.

Beide Teilformen einer zweigeteilten Form umschließen dabei jeweils nur eine Seitenwand und etwa die Hälfte des Laufstreifenbereiches, wobei aufgrund der Formgebung auf eine weitere Segmentierung der Umfangsbereiche der Teilformen verzichtet werden kann.

Sowohl die Segmentform 1 wie auch die zweigeteilte Form 4 sind innerhalb eines zu öffnenden Pressenmaules einer hier nicht näher dargestellten Vulkanisationspresse eingebaut und können mit Hilfe der Presse nach Einlegen des Reifenrohlings geschlossen, unter Innendruck gesetzt und beheizt werden.

Die Figur 2a zeigt eine auf einem flurgebundenen und frei beweglichen Reinigungswagen 7 angeordnete erfindungsgemäße Vorrichtung 8 bei der Reinigung einer oberen Teilform 2 einer Segmentform gemäß Figur 1a als Prinzipsskizze.

Erkennbar ist hier die an einem beweglichen Auslegerarm 9 mit Hilfe einer kardanischen Aufhängung 10 aufgehängte Isolationshaube 11 der erfindungsgemäßen Vorrichtung, wobei die Insolationshaube bereits mit ihrer abdichtend anschließbaren Öffnung an den Außenumfang der Teilform 2 angeschlossen ist.

Die obere und die untere Teilform 2 und 3 sind hierbei in einem nicht näher dargestellten Pressentisch 12 bzw. in einem Pressenstempel 13 einer Vulkanisationspresse aufgenommen, welche zusammen das Pressenmaul bilden. Der Pressenstempel 13 läßt sich bei dieser Vulkanisationspresse in Öffnungsrichtung 14 zur Einlage und Entnahme des Reifens oder auch zur Reinigung anheben.

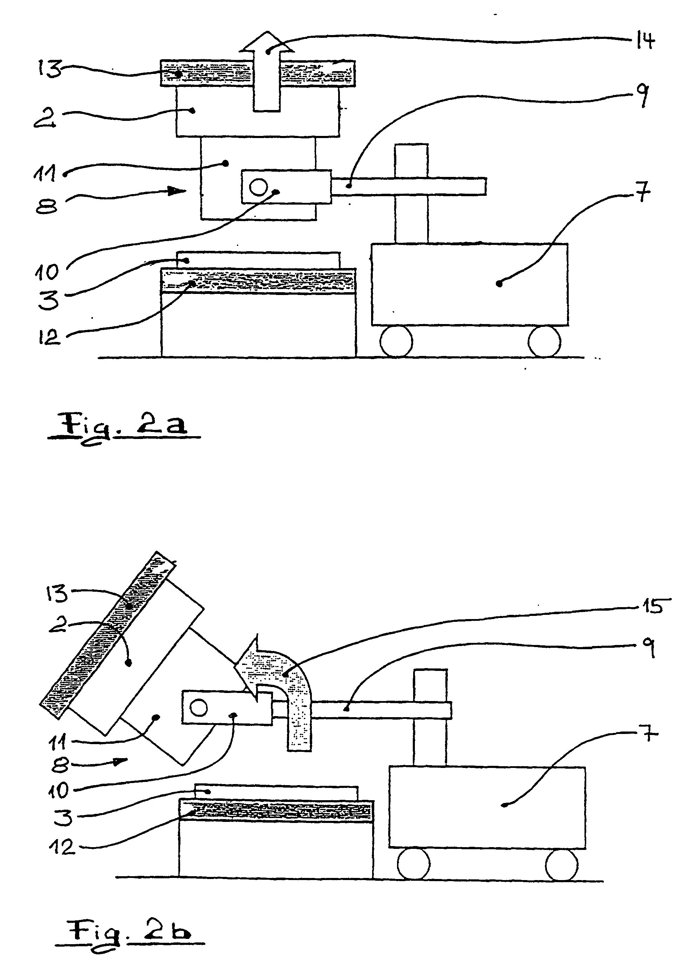

Die Figur 2b zeigt als Prinzipsskizze den entsprechenden Einsatz einer erfindungsgemäßen Reinigungsvorrichtung 8 zur Reinigung der oberen Teilform 2 einer Segmentform 1, wobei hier jedoch der obere Pressentisch 12 innerhalb einer Schwenkpresse in Öffnungsrichtung 15 verschwenkbar ausgebildet ist.

Auch hier ist die erfindungsgemäße Vorrichtung wieder über eine kardanische Aufhängung 10 und einen Auslegerarm 9 an einem flurbeweglichen Reinigungswagen 7 montiert, wobei durch den beweglichen Auslegerarm und die kardanische Aufhängung die Isolationshaube 11 ohne Schwierigkeiten mit ihrer anschließbaren Öffnung an den Außenumfang der Teilform 2 angeschlossen werden kann.

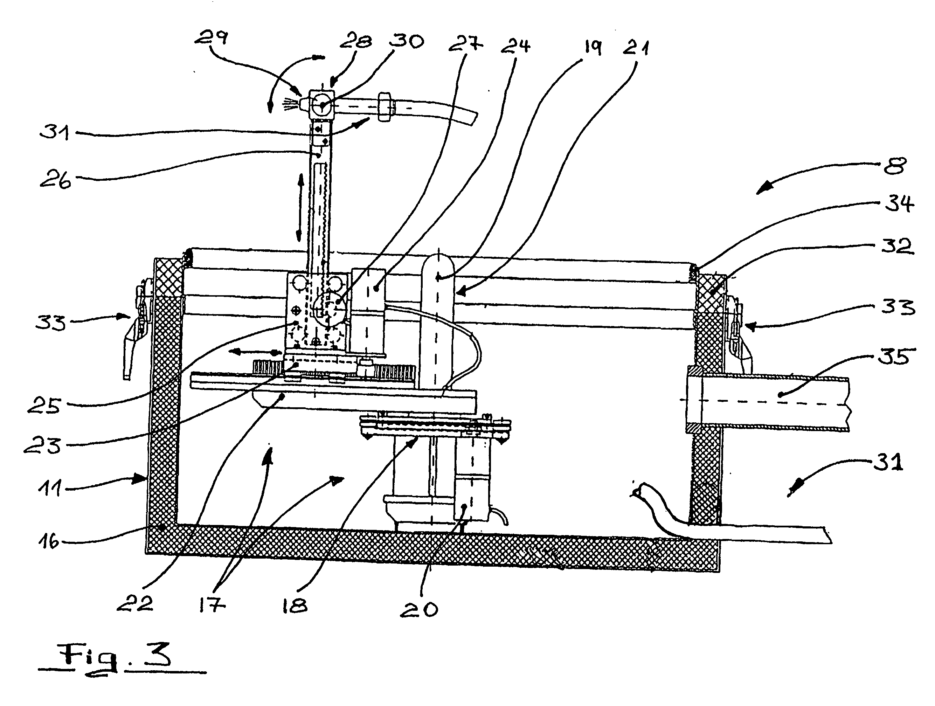

Die Figur 3 zeigt die erfindungsgemäße Vorrichtung im Schnitt. Erkennbar ist hier zunächst die doppelwandig ausgebildete Isolationshaube 11, welche als rechteckige Schallschutzhaube mit eingelegtem Schallschutzmaterial 16 zwischen den doppelten Wänden ausgebildet ist.

Innerhalb der Isolationshaube befindet sich die Manipulationseinrichtung 17, die auf ihrer Grundplatte 18 innerhalb der Isolationshaube zentrisch und um die Hochachse 19 der Isolationshaube drehbar angeordnet ist. Die Drehung erfolgt dabei über einen Schrittmotor 20, der das entsprechend gelagerte Oberteil der Grundplatte um ca. 370° vor- und zurückdrehen kann.

Oberhalb der Grundplatte 18 weist die Manipulationseinrichtung 17 einen an einer zentralen Führung 21 angeordneten Tragarm 22 auf, der mit dem Oberteil der Grundplatte drehbar ausgebildet ist und sich in die Nähe der Innenwandung der Isolationshaube erstreckt. Auf dem Tragarm ist ein im wesentlichen horizontal, d. h. quer zur Isolationshaube verfahrbar ausgebildeter Schlitten 23 angeordnet, der mit Hilfe eines Schrittmotors 24 über einen Zahnstangentrieb angetrieben und auf dem Tragarm über hier nicht im Detail dargestellte Rollenführungen radial innerhalb der Form bzw. innerhalb der Isolationshaube geführt wird.

Der Schlitten beinhaltet ebenfalls eine Aufnahme 25 für einen Hubbalken 26 , der im wesentlichen vertikal, d. h. parallel zur Hochachse der Isolationshaube verfahrbar ist. Der verfahrbare Hubbalken wird ebenfalls über einen Schrittmotor 27 und über einen Zahnstangentrieb angetrieben und mittels hier nicht im Detail dargestellten Führungsrollen in seiner Axialbewegung innerhalb der Aufnahme geführt.

Am oberen, d. h. an dem der zu reinigenden Teilform zugewandten Ende des Hubbalkens 26 ist eine Schwenkeinrichtung 28 angeordnet, welche die Strahleinrichtung/Düse 29 aufnimmt. Die Schwenkeinrichtung ist ebenfalls antreibbar ausgebildet und kann um etwa 100° um eine im wesentlichen quer zur Hochachse der Isolationshaube und quer zur Vertikalbewegung des Schlittens ausgerichtete Schwenkachse 30 verschwenkt werden.

Die Versorgung der Strahleinrichtung mit Druckluft und Trockeneispellets erfolgt über hier nicht näher dargestellte flexible Zuführungen 31.

Die Isolationshaube 11 weist an ihrem oberen Rand und im Bereich ihrer Öffnung einen austauschbaren Adapterring 32 auf, der über Klemm- bzw. Rastmechanismen 33 an die Isolationshaube angeschlossen wird.

Der Adapterring 32 beinhaltet einen Dichtring 34, wobei Form und Abmessung von Adapterring und Dichtring zum abdichtenden Anschluß am Außenumfang einer Teilform ausgebildet sind.

Weiterhin weist die Isolationshaube eine Durchführung für eine Absaugung 35 auf, mit deren Hilfe die bei der Reinigung anfallenden Schmutzpartikel und/oder Druckluft und Strahlmittel abgesaugt werden können.

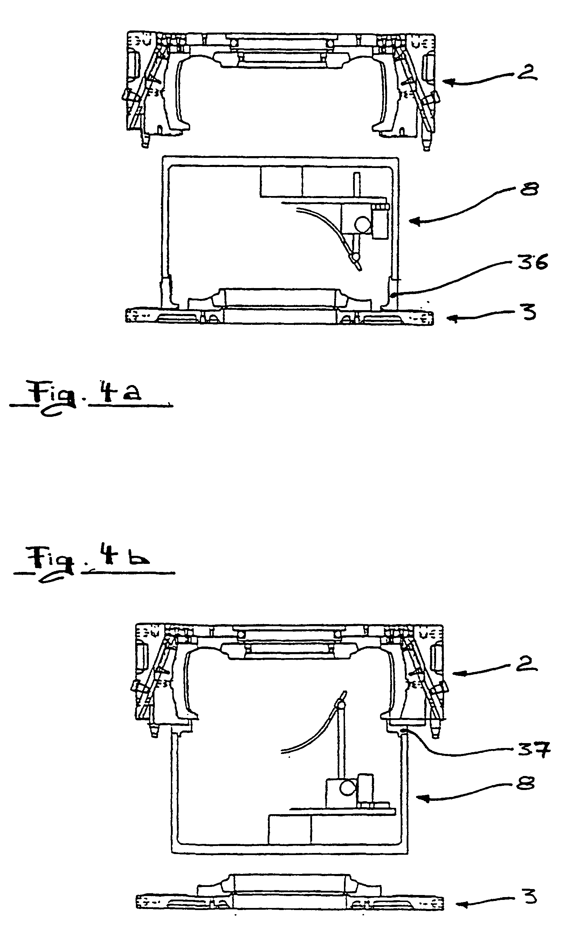

Die Figuren 4a und 4b zeigen noch einmal prinzipiell den Einsatz einer erfindungsgemäßen Reinigungsvorrichtung 8 zur Reinigung der oberen und unteren Teilform 2 und 3 einer Segmentform. Deutlich erkennbar sind hier insbesondere die unterschiedlichen Adapterringe 36 und 37, die jeweils zum abdichtenden Anschluß am Außenumfang der oberen oder unteren Teilform vorgesehen sind, und mit deren Hilfe auch bei den hier gezeigten unterschiedlich ausgebildeten Ober- und Unterformen die Strahleinrichtung und die Manipulationseinrichtung vollständig innerhalb des durch Teilform, Adapterring und Isolationshaube gebildeten Strahl- bzw Reinigungsraumes aufgenommen und gekapselt werden.

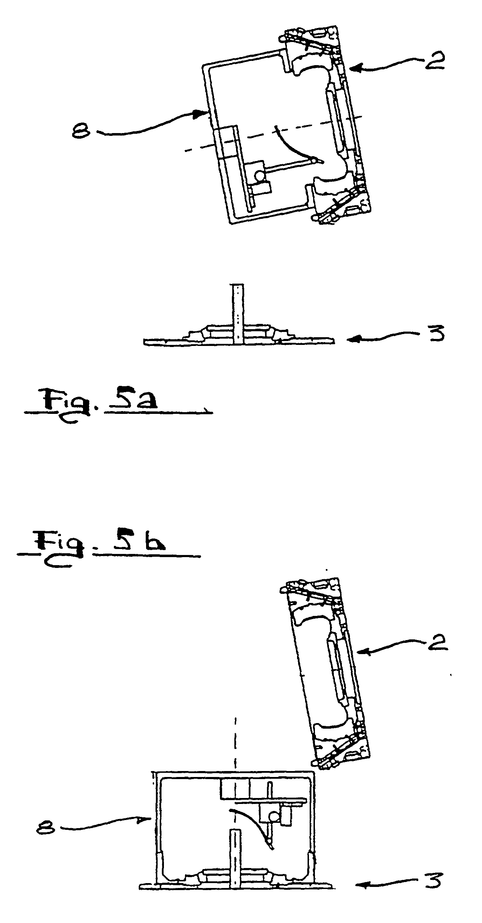

Die Figuren 5a und 5b zeigen in prinzipieller Darstellung einen entsprechenden Einsatz der erfindungsgemäßen Vorrichtung 8 bei einer in einer Schwenkpresse angeordneten Segmentform, in der die obere und untere Teilform 2 und 3 durch eine Schwenkbewegung geöffnet werden können.

### Bezugszeichenliste

- 1: Segmentform
- 2, 3: obere und untere Teilform
- 4: zweigeteilte Form
- 5, 6: obere und untere Teilform
- 7: Reinigungswagen
- 8: Reinigungsvorrichtung
- 9: Auslegerarm
- 10: kardanische Aufhängung
- 11: Isolationshaube
- 12: Pressentisch
- 13: Pressenstempel
- 14, 15: Öffnungsrichtung
- 16: schallabsorbierendes Material
- 17: Manipulationseinrichtung
- 18: Grundplatte
- 19: Hochachse der Isolationshaube
- 20: Schrittmotor
- 21: zentrale Führung
- 22: Tragarm
- 23: Schlitten
- 24: Schrittmotor
- 25: Aufnahme
- 26: Hubbalken
- 27: Schrittmotor
- 28: Schwenkeinrichtung
- 29: Strahleinrichtung / Düse
- 30: Schwenkachse
- 31: Zuführung für Druckluft / Trockeneis / Energie
- 32: Adapterring
- 33: Klemm- / Rastmechanismus
- 34: Dichtring
- 35: Absaugung
- 36,37: Adapterring

## Patentansprüche

1. Vorrichtung zur Reinigung der Innenwandungen von zur Öffnung in obere (2) und untere (3) Teilform geteilten Vulkanisationsformen für Reifen mittels Strahlgut, insbesondere zur Trockeneisreinigung, mit einer über eine Manipulationseinrichtung in mindestens vier Achsen beweglich angeordneten Strahleinrichtung oder Düse zur Bestrahlung der Innenwandungen, und mit einer als Isolationshaube ausgebildeten Einrichtung zur Kapselung der Strahleinrichtung und der bestrahlten Innenwandungen gegenüber der Umgebung, wobei die Isolationshaube am Außenumfang einer Teilform (2,3) abdichtend anschließbar ist und Öffnungen sowie Durchführungen für Leitungselemente zur Energie-, Druckluft- und Strahlmittelversorgung aufweist,
**dadurch gekennzeichnet,**
**dass** die Isolationshaube (11) mit Hilfe einer kardanischen Aufhängung (10) an einem im Wesentlichen quer zu ihrer Achse und im Wesentlichen horizontal sich erstreckenden beweglichen Auslegerarm (9) einer Transporteinrichtung aufgehängt und mit einem im Bereich ihrer Öffnung angeordneten austauschbaren Adapterring (32, 37, 38) zum abdichtenden Anschluss am Außenumfang einer Teilform (2, 3) versehen ist, so dass die Strahleinrichtung (29) und die Manipulationseinrichtung (17) vollständig innerhalb des durch eine Teilform, Adapterring und Isolationshaube gebildeten Strahl- bzw. Reinigungsraumes aufgenommen und gekapselt werden.

2. Vorrichtung nach Anspruch 1, **dadurch gekennzeichnet, dass** die an der Manipulationseinrichtung (17) angeordnete Strahleinrichtung oder Düse (29) in vier Achsen beweglich ausgebildet ist, wobei
a) die Manipulationseinrichtung (17) innerhalb der Isolationshaube (11) angeordnet ist und eine zur Hochachse (19) der Isolationshaube parallele oder mit dieser übereinstimmende Drehachse aufweist, um die
b) ein bis in die Nähe der Innenwandung der Isolationshaube sich erstreckender Tragarm (22) drehbar gelagert ist, auf dem ein im Wesentlichen horizontal, d.h. quer zur Hochachse (19) der Isolationshaube (11) verfahrbar ausgebildeter Schlitten (23) angeordnet ist, wobei
c) der Schlitten (23) einen im Wesentlichen vertikal, d.h. parallel zur Hochachse (19) der Isolationshaube (11) verfahrbaren Hubbalken (26) aufweist, wobei
d) der Hubbalken an seinem oberen, d.h. seinem der zu reinigenden Teilform zugewandten Ende eine die Strahleinrichtung oder Düse (29) aufnehmende Schwenkeinrichtung (28) mit im Wesentlichen quer zur Hochachse (19) der Isolationshaube (11) und quer zur Horizontalbewegung des Schlittens (23) ausgerichteter Schwenkachse (30) aufweist.

3. Vorrichtung nach Anspruch 1 oder 2, **dadurch gekennzeichnet, dass** die über einen Auslegerarm (9) an der Transporteinrichtung angeordnete Isolationshaube (11) in fünf Achsen beweglich ausgebildet ist, wobei
a) der Auslegerarm in Richtung seiner Achse und im Wesentlichen horinzorital translatorisch verfahrbar oder teleskopierbar, sowie
b) senkrecht zu seiner Achse und im Wesentlichen vertikal translatorisch verfahrbar und um seine Achse drehbar ausgebildet ist, wobei
c) die Isolationshaube am Ende des Auslegerarmes kardanisch aufgehängt ist.

4. Vorrichtung nach Anspruch 1 bis 3, **dadurch gekennzeichnet, dass** der Adapterring und/oder die Isolationshaube als Schallschutzring/Schallschutzhaube ausgebildet sind, wobei im Wesentlichen deren Wandungen mit schallabsorbierenden Materialien (16) versehen sind.

5. Vorrichtung nach Anspruch 4, **dadurch gekennzeichnet, dass** die Isolationshaube als Vieleck, vorzugsweise als Rechteck ausgebildet ist.

6. Vorrichtung nach Anspruch 1 bis 5, **dadurch gekennzeichnet, dass** die Vorrichtung eine zentrale oder mehrere ggf. abhängige Steuereinrichtungen sowie zugehörige Sensoreinrichtungen sowie zugehörige Sensoreinrichtungen für alle Bewegungsachsen aufweist.

7. Vorrichtung nach Anspruch 1 bis 6, **dadurch gekennzeichnet, dass** die Isolationshaube eine Durchführung für eine Absaugung (35) von bei der Reinigung anfallenden Schmutzpartikeln und / oder Strahlmittel aufweist.

8. Vorrichtung nach Anspruch 1 bis 7, **dadurch gekennzeichnet, dass** die Transporteinrichtung als flurgebundener und frei beweglicher Reinigungswagen (7) ausgebildet ist.

## Claims

1. Apparatus for cleaning the inner walls of vulcanization moulds for tyres, which moulds are divided for opening purposes into an upper part-mould (2) and a lower part-mould (3), by means of abrasive material, in particular for cleaning using dry ice, having a blasting device or nozzle, which is. arranged in a manner such that it is movable in at least four axes via a manipulation device, for blasting the inner walls, and having a device, which is designed as an insulation hood, for encapsulating the blasting device and the blasted inner walls in relation to the environment, the insulation hood being connectable to the outer circumference of a part-mould (2, 3) in a sealing manner and having openings and ducts for line elements for supplying power, compressed air and abrasives, **characterized in that** the insulation hood (11) is suspended with the aid of a cardanic suspension means (10) on a movable extension arm (9), extending essentially transversely with respect to its axis and essentially horizontally, of a transporting device, and is provided with an interchangeable adapter ring (32, 37, 38), which is arranged in the region of its opening, for the sealing connection to the outer circumference of a part-mould (2, 3), so that the blasting device (29) and the manipulation device (17) are entirely accommodated and encapsulated within the blasting or cleaning space formed by a part-mould, adapter ring and insulation hood.

2. Apparatus according to Claim 1, **characterized in that** the blasting device or nozzle (29) arranged on the manipulation device (17) is designed in a manner such that it is movable in four axes,
a) the manipulation device (17) being arranged within the insulation hood (11) and having an axis of rotation which is parallel to the vertical axis (19) of the insulation hood or coincides therewith, about which
b) a supporting arm (22) extending into the vicinity of the inner wall of the insulation hood is mounted rotatably, on which supporting arm a slide (23) which is designed such that it can be moved essentially horizontally, i.e. transversely with respect to the vertical axis (19) of the insulation hood (11), is arranged,
c) the slide (23) having a lifting beam (26) which can be moved essentially vertically, i.e. parallel to the vertical axis (19) of the insulation hood (11),
d) the lifting beam having at its upper end, i.e. its end facing the part-mould to be cleaned, a pivoting device (28) which holds the blasting device or nozzle (29) and has a pivot axis (30) aligned essentially transversely with respect to the vertical axis (19) of the insulation hood (11) and transversely with respect to the horizontal movement of the slide (23).

3. Apparatus according to Claim 1 or 2, **characterized in that** the insulation hood (11), which is arranged on the transporting device via an extension arm (9), is designed such that it is movable in five axes,
a) the extension arm being designed in a manner such that it can be moved or telescoped in the direction of its axis and in a translatory manner essentially horizontally, and
b) such that it can be moved perpendicular to its axis and in a translatory manner essentially vertically and such that it can be rotated about its axis,
c) the insulation hood being suspended cardanically at the end of the extension arm.

4. Apparatus according to Claims 1 to 3, **characterized in that** the adapter ring and/or the insulation hood are designed as a sound-insulating ring/sound-insulating hood, with essentially the walls thereof being provided with sound-absorbing materials (16).

5. Apparatus according to Claim 4, **characterized in that** the insulation hood is designed as a polygon, preferably as a rectangle.

6. Apparatus according to Claims 1 to 5, **characterized in that** the apparatus has a central control device or a plurality of, if appropriate, dependent control devices and associated sensor devices and associated sensor devices for all of the axes of movement.

7. Apparatus according to Claims 1 to 6, **characterized in that** the insulation hood has a duct for a suction extraction (35) of dirt particles and/or abrasives arising during the cleaning.

8. Apparatus according to one of Claims 1 to 7, **characterized in that** the transporting device is designed as a floor-going and freely movable cleaning carriage (7).

## Revendications

1. Dispositif pour nettoyer les parois internes de moules de vulcanisation pour pneumatiques divisés pour leur ouverture en moules partiels supérieur (2) et inférieur (3), au moyen d'un produit pulvérisé, notamment pour un nettoyage à la neige carbonique, comprenant un dispositif de jet ou une buse de pulvérisation des parois internes, disposé(e) de manière déplaçable dans au moins quatre axes par le biais d'un dispositif de manipulation, et comprenant un dispositif réalisé sous la forme d'une capote d'isolation pour l'encapsulage du dispositif de jet et des parois internes soumises au jet vis-à-vis de l'environnement, la capote d'isolation pouvant être raccordée de manière étanche sur la périphérie extérieure d'un moule partiel (2, 3) et présentant des ouvertures ainsi que des passages pour des éléments de conduites pour l'alimentation en énergie, en air comprimé et en agent de pulvérisation,
**caractérisé en ce que**
la capote d'isolation (11) est accrochée à l'aide d'une suspension à la cardan (10) sur un bras de potence (9) mobile s'étendant essentiellement transversalement à son axe et essentiellement horizontalement, d'un dispositif de transport, et est pourvue d'une bague d'adaptateur (32, 37, 38) remplaçable disposée dans la région de son ouverture, pour le raccordement étanche à la périphérie extérieure d'un moule partiel (2, 3), de sorte que le dispositif de jet (29) et le dispositif de manipulation (17) soient complètement reçus et encapsulés à l'intérieur de l'espace de pulvérisation ou de nettoyage formé par un moule partiel, la bague d'adaptateur et la capote d'isolation.

2. Dispositif selon la revendication 1, **caractérisé en ce que** le dispositif de jet ou la buse (29) disposé(e) sur le dispositif de manipulation (17) est réalisé(e) de manière déplaçable dans quatre axes,
a) le dispositif de manipulation (17) étant disposé à l'intérieur de la capote d'isolation (11) et présentant un axe de rotation parallèle à l'axe vertical (19) de la capote d'isolation ou coïncidant avec celui-ci, autour duquel
b) un bras de support (22) s'étendant jusqu'à proximité de la paroi interne de la capote d'isolation est monté à rotation, sur lequel est disposé un chariot (23) réalisé de manière déplaçable essentiellement horizontalement, c'est-à-dire transversalement à l'axe vertical (19) de la capote d'isolation (11),
c) le chariot (23) présentant une poutre de levage (26) déplaçable essentiellement verticalement, c'est-à-dire parallèlement à l'axe vertical (19) de la capote d'isolation (11),
d) la poutre de levage présentant, à son extrémité supérieure, c'est-à-dire tournée vers le moule partiel à nettoyer, un dispositif pivotant (28) recevant le dispositif de jet ou la buse (29) avec un axe de pivotement (30) orienté essentiellement transversalement à l'axe vertical (19) de la capote d'isolation (11) et transversalement au déplacement horizontal du chariot (23).

3. Dispositif selon la revendication 1 ou 2, **caractérisé en ce que** la capote d'isolation (11) disposée par le biais d'un bras de potence (9) sur le dispositif de transport est réalisée de manière déplaçable dans cinq axes,
a) le bras de potence étant déplaçable ou télescopable dans la direction de son axe et essentiellement horizontalement en translation, et
b) étant déplaçable en translation perpendiculairement à son axe et essentiellement verticalement et étant réalisé de manière à pouvoir tourner autour de son axe,
c) la capote d'isolation étant accrochée par un système à la cardan à l'extrémité du bras de potence.

4. Dispositif selon l'une quelconque des revendications 1 à 3, **caractérisé en ce que** la bague d'adaptateur et/ou la capote d'isolation sont réalisées sous la forme d'une bague de protection sonore/d'une capote de protection sonore, dont les parois sont essentiellement pourvues de matériaux absorbant les sons (16).

5. Dispositif selon la revendication 4, **caractérisé en ce que** la capote d'isolation est réalisée sous la forme d'un polygone, de préférence d'un rectangle.

6. Dispositif selon l'une quelconque des revendications 1 à 5, **caractérisé en ce que** le dispositif présente un dispositif de commande central ou plusieurs dispositifs de commande éventuellement dépendants ainsi que des dispositifs de détection associés pour tous les axes de déplacement.

7. Dispositif selon l'une quelconque des revendications 1 à 6, **caractérisé en ce que** la capote d'isolation présente un passage pour une aspiration (35) de particules de poussière apparaissant lors du nettoyage et/ou d'agent de pulvérisation.

8. Dispositif selon l'une quelconque des revendications 1 à 7, **caractérisé en ce que** le dispositif de transport est réalisé sous la forme d'un chariot de nettoyage au sol et librement déplaçable (7).
